# EUROPEAN PATENT APPLICATION

(11) **EP 4 582 750 A1**
(43) Date of publication of application: **09.07.2025**
(21) Application number: 24223904.4
(22) Date of filing: 31.12.2024
(51) Int. Cl.: F24H 9/00, F24H 3/04

(54) **HOT AIR GUN**

(30) Priority: 02.01.2024 CN 202410005832
(71) Applicant: Zhejiang Prulde Electric Appliance Co., Ltd., Jinhua, Zhejiang 321035 (CN)
(72) Inventor: Yang, Chenghao, Jinhua, 321035 (CN)
(74) Representative: karo IP

(57) **Abstract**

Disclosed is a hot air gun, which relates to the field of power guns, including a housing, a heating assembly, and an airflow generation assembly, the heating assembly and the airflow generation assembly being arranged in the housing, the airflow generation assembly being disposed rear to the heating assembly, the airflow generation assembly comprising a fan wheel and an electric motor configured to drive the fan wheel, an air inlet being provided at a rear portion of the housing; the hot air gun further includes a screen filter mounted on the housing via a support frame, the screen filter covering the air inlet and being provided with a plurality of filter apertures distributed at intervals, an aperture size of the filter aperture being smaller than that of the air inlet. The screen filter may filter the air accessing the inside of the housing, which can effectively prevent foreign objects such as debris and paper scraps from accessing, with the air, the inside of a gun body through the air inlet of a larger aperture size, thereby ensuring use safety of the gun body and service life of the electric motor.

## Description

The subject matter described herein relates to a power tool, and more particularly relates to a hot air gun.

A hot air gun is a power tool that generates a stream of hot air by heating air. The hot air gun has various applications. Specifically, the hot air gun may be used to remove rust, strip old paint from a metallic surface, remove a self-adhesive sticker, bend a plastic pipe, dry sodden wood, heat packaging film or packaging tube, heat polyvinyl for connecting metal pieces, heat a weldment, and solder or desolder a component. A main structure of the hot air gun comprises an electric motor, a fan wheel, and a heating element assembly; the heating element assembly produces heat when being energized, the electric motor drives the fan wheel to rotate to create a stream of air flowing towards the heating element assembly, and the stream of air passing through the heating element assembly is heated to form a stream of hot air that is blown out from a front end of the hot air gun.

An existing hot air gun generally adopts a low-revolution-speed electric motor and has a large air inlet arranged on its housing; when the electric motor drives the fan wheel to rotate, external air may flow into the gun body via the air inlet. Due to the large air inlet, if the hot air gun leverages a high-speed motor to drive the fan wheel, foreign objects such as debris and paper scraps are easily suctioned into the gun body via the air inlet, which would affect use safety and work performance of the hot air gun and deteriorate user experience.

To overcome or at least mitigate the problems of the prior art, a hot air gun according to the independent claim is proposed. The dependent claims refer to preferred or advantageous embodiments. Features listed in the claims may be combined with each other in many ways and also combined with features of the specification and drawings.

To overcome the above and other drawbacks in conventional technologies, the disclosure describes a hot air gun, which leverages a screen filter to filter air accessing the inside of a housing to effectively prevent foreign objects such as debris and paper scraps from accessing, with the air, the inside of a gun body through an air inlet of a larger aperture size, thereby ensuring use safety of the gun body and service life of an electric motor.

A hot air gun as described herein comprises a housing, a heating assembly, and an airflow generation assembly, the heating assembly and the airflow generation assembly being arranged in the housing, the airflow generation assembly being disposed rear to the heating assembly, the airflow generation assembly comprising a fan wheel and an electric motor configured to drive the fan wheel, an air inlet being provided at a rear portion of the housing, the hot air gun further comprises a screen filter mounted on the housing via a support frame, the screen filter covering the air inlet and being provided with a plurality of filter apertures distributed at intervals, an aperture size of the filter aperture being smaller than that of the air inlet.

The hot air gun according to the disclosure leverages the screen filter mounted on the housing via the support frame to cover the air inlet; since the aperture size of individual filter apertures on the screen filter is smaller than that that of the air inlet on the housing, external air may smoothly access the inside of the gun body via the filter apertures when the hot air gun is operated; in addition, the screen filter may filter the air flowing into the housing; particularly when the airflow generation assembly adopts a high-speed electric motor to drive the fan wheel, foreign objects such as debris and paper scraps may be effectively prevented from accessing, with the air, the inside of the gun body through the air inlet of a larger aperture size, so that the foreign objects cannot enter the inside of the gun body affecting components such as the electric motor and the heating assembly, which ensures use safety of the gun body and service life of the electric motor.

In some implementations, the support frame comprises an inner frame body and an outer frame sheet which are spaced from each other, the screen filter is disposed on the inner frame body, the inner frame body is fitted with the housing, the outer frame sheet covers the inner frame body, and an air intake gap communicating with the filter aperture is formed between the outer frame sheet and the inner frame body.

The inner frame body and the outer frame sheet of the support frame are spaced from each other, the screen filter is disposed on the inner frame body, the outer frame sheet covers the inner frame body, and the air intake gap is formed between the outer frame sheet and the inner frame body. When the screen filter is mounted on the housing via the support frame, the outer frame sheet is at least partially separated from the housing in the circumferential direction. When the electric motor drives the fan wheel to rotate, the external air accesses the inside of the housing through the air intake gap and the filter apertures from peripheral lateral sides of the support frame; this lateral air intaking manner may prevent the screen filter from being blocked by large chunks of paper scraps or film leading to unsmooth air intaking, which may also increase the difficulty of the foreign objects such as the debris or paper scraps entering the air intake gap with the air, whereby smooth air intaking is ensured when the gun body is operating.

In some implementations, the hot air gun further comprises an airflow guidance enclosure arranged between the airflow generation assembly and the heating assembly, the airflow guidance enclosure comprising a blown airflow guidance construction and a heat-dissipating airflow guidance construction, the blown airflow guidance construction being configured to guide a blown airflow generated by the airflow generation assembly to flow from rear to front, the heat-dissipating airflow guidance construction being disposed at an outer periphery of the blown airflow guidance construction and configured to guide residual heated air in the heating assembly to flow from front to rear.

The blown airflow generated when the electric motor drives the fan wheel to rotate may smoothly flow towards the heating assembly via the blown airflow guidance construction, and the airflow flowing through the heating assembly is heated and finally blown out of the front end of the heating assembly to form a hot airflow, whereby the hot air gun may operate smoothly. When the hot air gun is hung such that its tip end points downward upon end of use, residual high-temperature heated air in the heating assembly flows upward; since the heat-dissipating airflow guidance construction is disposed at the outer periphery of the blown airflow guidance construction, the high-temperature heated air flowing upward is guided by the heat-dissipating airflow guidance construction mainly to the outer periphery of the blown airflow guidance construction, which prevents the high-temperature heated air from flowing directly through the blown airflow guidance construction into the electric motor from front to rear causing rise of the internal temperature of the electric motor, thereby preventing accelerated aging of the components of the electric motor caused by the high temperature inside the electric motor, particularly preventing the circuit board of the electric motor from accelerated aging caused by the high temperature, which ensures work performance and service life of the electric motor and enhances operation performance stability of the hot air gun.

In some implementations, the airflow guidance enclosure comprises a front enclosure portion and a rear enclosure portion which are fixed in a front-rear direction, the blown airflow guidance construction comprises a rim arranged at a front end of the rear enclosure portion and an air guidance cavity arranged on the front enclosure portion; an air guidance port is defined by encirclement of the rim; the rim is inserted in the air guidance cavity so that the air guidance port communicates with the air guidance cavity; and the heat-dissipating airflow guidance construction comprises a heat-dissipating gap arranged between an outer surface of the rim and a cavity wall of the air guidance cavity.

In some implementations, the heat-dissipating airflow guidance construction comprises a heat-dissipating cavity which is arranged between the rear enclosure portion and the front enclosure portion and disposed at an outer periphery of the blown airflow guidance construction, the heat-dissipating gap communicating with the heat-dissipating cavity.

In some implementations, the rear enclosure portion is provided with a rear partition plate forming a rear cavity wall of the heat-dissipating cavity, and the heat-dissipating airflow guidance construction comprises a heat-dissipating hole arranged on the rear partition plate and communicating with the heat-dissipating cavity.

The heat-dissipating gap is formed between the outer periphery of the air guidance port and the cavity wall of the air guidance cavity, the heat-dissipating cavity disposed at an outer periphery of the blown airflow guidance construction is arranged between the front enclosure portion and the rear enclosure portion, a heat-dissipating hole is provided on a rear partition plate of the rear enclosure portion, and the heat-dissipating gap, the heat-dissipating cavity, and the heat-dissipating hole communicate with each other to constitute the heat-dissipating airflow guidance construction, so that the residual high-temperature heated air in the heating assembly may flow upward into the housing through the heat-dissipating gap, the heat-dissipating cavity, and the heat-dissipating hole. Since the housing has a large inner space, the high-temperature heated air accessing the inside of the housing can be effectively cooled; in addition, since an air inlet is provided on the housing, the high-temperature air inside the housing may also flow out of the gun body via the air inlet. By reasonably setting a specific structure of the heat-dissipating airflow guidance construction, the residual high-temperature heated air in the heating assembly can be effectively cooled.

In some implementations, a conical hood located at an inner periphery of the rim is provided at a front end of the rear enclosure portion, and the air guidance port is arranged between an outer surface of the conical hood and an inner surface of the rim, an outer diameter of the conical hood gradually increasing from rear to front.

The air guidance port is arranged between the outer surface of the conical hood and the inner surface of the rim; since the outer diameter of the conical hood gradually increases from rear to front, the caliber of the air guidance port gradually decreases from rear to front, so that the blown airflow flows smoothly from rear to front via the air guidance port at a higher forward flowing speed.
Fig. 1 is an overall structural diagram of a hot air;
Fig. 2 is an exploded view of the hot air gun;
Fig. 3 is an exploded view of an airflow generation assembly and an airflow guidance enclosure of the hot air gun;
Fig. 4 is an exploded view of a heating assembly of the hot air gun;
Fig. 5 is a local structural view of a housing of the hot air gun;
Fig. 6 is a local sectional view of the housing in a left-right direction of the hot air gun;
Fig. 7 is a structural view of fitting between a screen filter and a support frame of the hot air gun;
Fig. 8 is an exploded view of the screen filter and the support frame of the hot air gun;
Fig. 9 is a sectional view of the support frame in a width direction of the hot air gun;
Fig. 10 is a local sectional view of the hot air gun in the left-right direction when the screen filter is mounted on the housing via the support frame;
Fig. 11 is a local structural view of a left housing body in the hot air gun;
Fig. 12 is a sectional view of partial structure of the heating assembly perpendicular to the axial direction of the hot air gun;
Fig. 13 is a first structural diagram of a rear enclosure portion of the hot air gun;
Fig. 14 is a second structural diagram of the rear enclosure portion of the hot air gun;
Fig. 15 is a structural view of a front enclosure portion of the hot air gun ;
Fig. 16 is a structural diagram of fitting between the airflow guidance enclosure and the heating assembly of the hot air gun;
Fig. 17 is a structural diagram of fitting between the airflow generation assembly, the airflow guidance enclosure, and the heating assembly of the hot air gun.

Reference Numerals: 10 - hot air gun, AF - blown airflow, HA - heated air;
101 - limiting construction; 102- limit-fitting construction;
100 - housing; 110 - air inlet; 120 - left housing body; 130 - right housing body; 140 - front cylindrical body; 150 - grip; 161 - mounting groove; 162 - limiting surface; 163 - limiting slot; 164 - slit; 165 - limiting column; 166 - interspace; 170 - convex rib; 180 - top cover;
200 - heating assembly; 210 - heating element rack; 211 - accommodation groove; 212 - baffle bar; 220 - heating element; 221 - heating body; 222 - connecting segment; 230 - cartridge; 231 - thermally insulative sleeve; 232 - metallic sleeve; 233 - air outlet; 240 - rear base cover; 241- air passage port; 250 - limiting cover; 251 - avoidance hole; 260 - retaining plate; 270 - limiting sheet;
300- airflow generation assembly; 310 - fan wheel; 320 - electric motor; 321 - rotary shaft; 330 - air guidance cylinder; 331 - air guidance passage; 340 - end cap; 341 -ventilation hole; 350 - shock absorber; 351 - shock absorption sleeve;
410 - support frame; 411 - inner frame body; 412 - outer frame sheet; 413 - mounting port; 414 - air intake gap; 415 - connecting portion; 4151- bump; 416 - tail plate; 417 - through hole; 418 - limiting rib; 419 - limiting snap-in recess; 420 - screen filter; 421 - filter aperture; 422 - notch;
500- airflow guidance enclosure; 510 - front enclosure portion; 511 - inner ring body; 512 - outer ring body; 513 - front cavity; 514 - air guidance cavity; 520 - rear enclosure portion; 521 - rim; 522 - apron plate; 523 - rear partition plate; 524 - air guidance port; 525 - rear cavity; 526 - conical hood; 527 - inner cavity; 530 - heat-dissipating airflow guidance construction; 531 - heat-dissipating gap; 532 - heat-dissipating cavity; 533 - heat-dissipating hole; 540 - blown airflow guidance construction;
610 - main control board; 620 - operation display unit

Hereinafter, the disclosure will be described in further detail through specific implementations with reference to the accompanying drawings. It is understood that, the orientational or positional relationships indicated by the terms "up," "down," "left," "right," "longitudinal," "transverse," "inner," "outer," "vertical," "horizontal," "top," "bottom," and the like are orientational and positional relationships based on the drawings, which are intended only for facilitating description of the disclosure and simplifying relevant illustrations, not for indicating or implying that the devices or elements compulsorily possess those specific orientations and are compulsorily configured and operated with those specific orientations; therefore, such terms should not be construed as limitations to the disclosure.

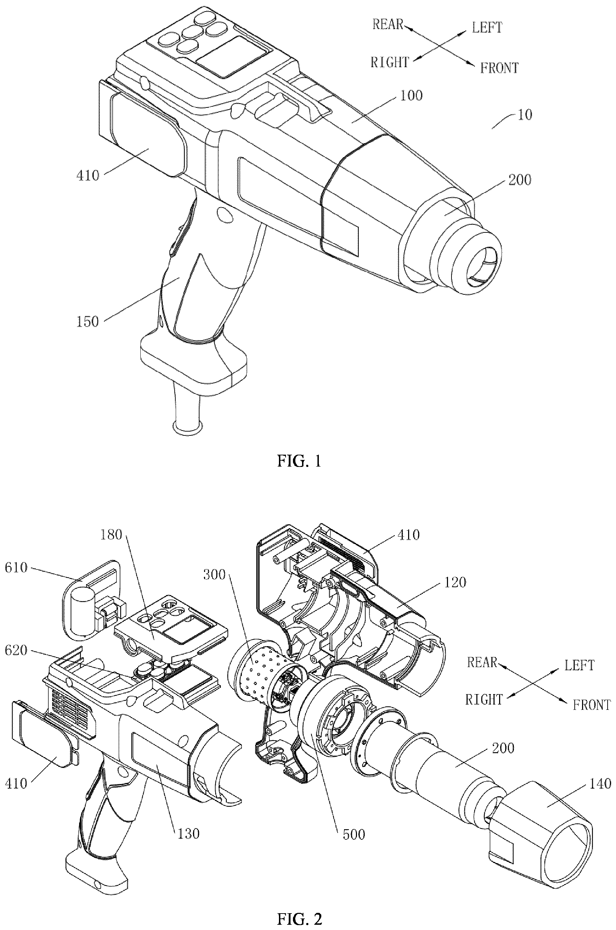

Referring to Figs. 1 through 17, a hot air gun 10 comprises a housing 100, a heating assembly 200, and an airflow generation assembly 300, the heating assembly 200 and the airflow generation assembly 300 being arranged in the housing 100, the airflow generation assembly 300 being disposed rear to the heating assembly 200, the airflow generation assembly 300 comprising a fan wheel 310 and an electric motor 320 configured to drive the fan wheel 310, an air inlet 110 being provided at a rear portion of the housing 100. The hot air gun further comprises a screen filter 420 that is mounted on the housing 100 via a support frame 400, the screen filter 420 covering the air inlet 110 and having a plurality of filter apertures 421 distributed at intervals, an aperture size of the filter aperture 421 being smaller than that of the air inlet 110.

Since the aperture size of individual filter apertures 421 on the screen filter 420 is smaller than that that of the air inlet 110 on the housing 100, external air may smoothly access the inside of the gun body via the filter apertures 421 when the hot air gun is operated; meanwhile, the screen filter 420 may filter the air flowing into the housing 100; particularly when the airflow generation assembly 300 adopts a high-speed electric motor 320 to drive the fan wheel 310, foreign objects such as debris and paper scraps may be effectively prevented from accessing, with the air, the inside of the gun body through the air inlet 110 of a larger aperture size, so that the foreign objects cannot enter the inside of the gun body affecting components such as the electric motor 320 and the heating assembly 200, which ensures use safety of the gun body and service life of the electric motor 320.

Fig. 2 illustrates an exemplary solution, in which the housing 100 comprises a left housing body 120, a right housing body 130, and a front cylindrical body 140, the left housing body 120 and the right housing body 130 being fixed together, the front cylindrical body 140 fixedly sleeving front ends of the left housing body 120 and the right housing body 130, a rear end of the housing 100 extending downward to form a grip 150 configured for a user to grip. The airflow generation assembly 300 is disposed in the rear end of the housing 100, and the heating assembly 200 is disposed in a front end of the housing 100 and projects forward out of the front cylindrical body 140.

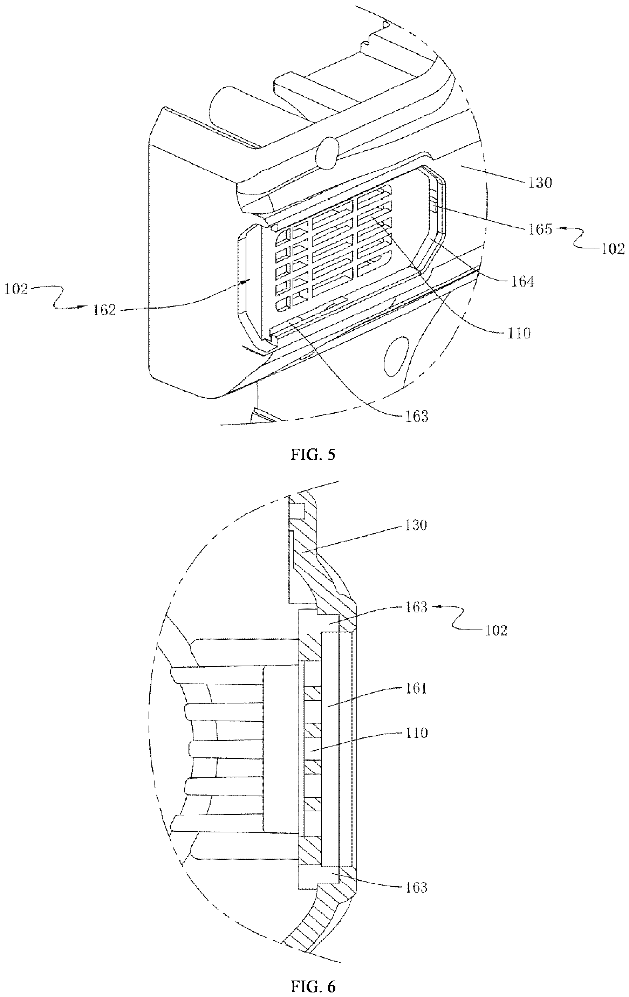

Fig. 5 illustrates an exemplary solution, in which the air inlet 110 is provided at left and right sides of the rear end of the housing 100, respectively, the air inlet 110 at each side being exemplarily formed with a plurality of grid apertures distributed at intervals. Correspondingly, the screen filter 420 configured to cover the air inlet 110 at the corresponding side is mounted at each of the left and right sides of the housing 100 via a support frame 410. To facilitate the user to clean the screen filter 420, the screen filter 420 is exemplarily detachably mounted at each of the left and right sides of the housing 100 via the support frame 410.

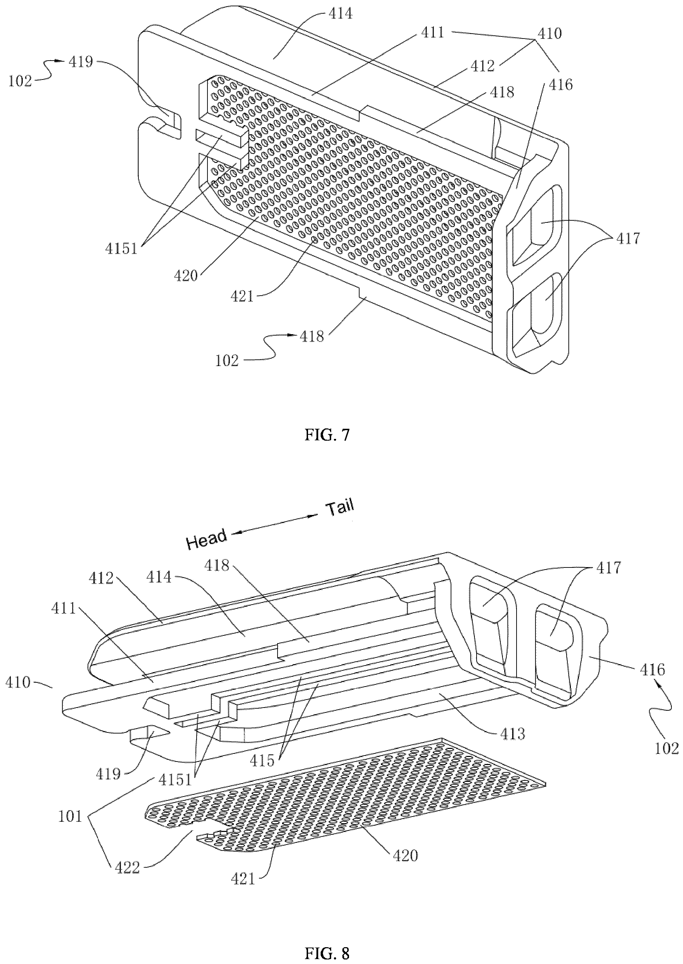

Figs. 7, 8, and 9 illustrate an exemplary solution, in which the support frame 410 comprises an inner frame body 411 and an outer frame sheet 412 which are spaced from each other, the inner frame body 411 being of a substantially rectangular frame body shape and formed with a mounting port 413 configured to mount the screen filter 420, the outer frame sheet 412 being of a sheet shape and capable of substantially fully covering the inner frame body 411 and the screen filter 420, an air intake gap 414 being formed between the inner frame body 411 and the outer frame sheet 412. Specifically, the support frame 410 further comprises a connecting portion 415 arranged between the inner frame body 411 and the outer frame sheet 412 and configured to connect the inner frame body 411 and the outer frame sheet 412, and the air intake gap 414 is disposed at respective sides of the connecting portion 415.

To ensure structural stability when the screen filter 420 is mounted on the housing 100 via the support frame 410, a limiting construction 101 configured to limit the screen filter 420 is arranged between the screen filter 420 and the inner frame body 411 and between the screen filter 420 and the connecting portion 415, respectively. Specifically, a bump 4151 projecting into the mounting port 413 is provided at one end of the connecting portion 415, and a notch 422 fitted with the bump 4151 is provided at an end portion of the screen filter 420. The screen filter 420 and the mounting port 413 may be tightly fitted; the screen filter 420 is fitted with the mounting port 413 so as to be mounted on the inner frame body 411, the screen filter 420 abuts against the connecting portion 415, and the bump 4151 is inserted in the notch 422; fitting between the screen filter 420 and the mounting port 413, abutment between the screen filter 420 and the connecting portion 415, and fitting between the bump 4151 and the notch 422 can all serve to limit the screen filter 420, so that the screen filter 420 mounted on the inner frame body 411 can be positionally retained relative to the support frame 410. As an alternative solution of this implementation, the limiting construction for limiting the screen filter 420 may be only provided between the inner frame body 411 and the screen filter 420 or only provided between the connecting portion 415 and the screen filter 420, so long as the screen filter 420 can be stably mounted on the support frame 410. In addition, the inner frame body 421 may be provided with a snap configured to limit the screen filter 420, the snap being disposed at an outer edge of the mounting port 413.

Referring to Fig. 7, a tail plate 416 connected to both of the inner frame body 411 and the outer frame sheet 412 is provided at a tail end of the support frame 410, the tail plate 416 being substantially perpendicular to the outer frame sheet 412, one side of the tail plate 416 projecting out of the inner frame body 411. To increase air intaking points, two through holes 417 disposed at an interval are formed on the tail plate 416, each through hole 417 communicating with the air intake gap 414 at a same side. As an exemplary solution of this implementation, the inner frame body 411, the outer frame sheet 412, the connecting portion 415, and the tail plate 416 are one-piece formed. As an alternative solution of this implementation, the through holes 417 on the tail plate 416 may be canceled so long as air intake requirements are met.

Referring to Figs. 5 and 6, a mounting groove 161 in which the inner frame body 411 is inserted is provided at each of left and right sides of the housing 100, the mounting groove 161 extending in a front-rear direction, head and tail ends of the support frame 410 being arranged in the front-rear direction when being mounted on the housing 100. To ensure structural stability of the screen filter 420 mounted on the housing 100 via the support frame 410, a limit-fitting construction 102 is arranged between the support frame 410 and the housing 100. Specifically, the limit-fitting construction 102 comprises a limiting surface 162 disposed at a rear end of the mounting groove 161 and a tail plate 416 disposed at a tail end of the support frame 410. The support frame 410 inserted in place allows for abutment between the tail plate 416 and the limiting surface 162. The abutment fitting between the tail plate 416 and the limiting surface 162 limits insertion depth of the support frame 410, preventing insufficient insertion or over insertion of the support frame 410, thereby ensuring that the support frame 410 inserted in place allows for the screen filter 420 to fully cover the air inlet 110. In addition, the limit-fitting construction 102 further comprises a limiting slot 163 arranged on upper-side and lower-side groove walls of the mounting groove 161, respectively, and a limiting rib 418 disposed at upper and lower sides of the inner frame body 411, respectively; when the support frame 410 is fitted with the mounting groove 161 so as to be mounted to the housing 100, the limiting rib 418 is inserted in the limiting slot 163; fitting between the limiting rib 418 and the limiting slot 163 allows for the support frame 410 to be positionally retained in both of the up-down direction and left-right direction. Furthermore, the limit-fitting construction 102 further comprises a limiting column 165 disposed at a front end of the mounting groove 161 and a limiting snap-in recess 419 disposed at a head end of the inner frame body 411. A slit 164 in which the front end of the inner frame body 411 is inserted is arranged on a front groove wall of the mounting groove 161, the limiting column 165 being disposed in the slit 164. The support frame 410 inserted in place allows for the front end of the inner frame body 411 to be inserted in the slit 164, and meanwhile the limiting column 165 is snapped in the limiting snap-in recess 419. Fitting between the limiting column 65 and the limiting snap-in recess 419 allows for the support frame 410 to be positionally retained in the front-rear direction. As an alternative solution of this implementation, the positions where the limiting rib 418 and the limiting slot 163 are arranged may be swapped, i.e., the limiting rib is arranged on the upper-side and lower-side groove walls of the mounting groove 161, respectively, while the limiting slot is arranged on the upper and lower sides of the inner frame body 411, respectively, so that when the support frame 410 is inserted in the mounting groove 161 from rear to front, the limiting rib 418 is inserted in the limiting slot 163.

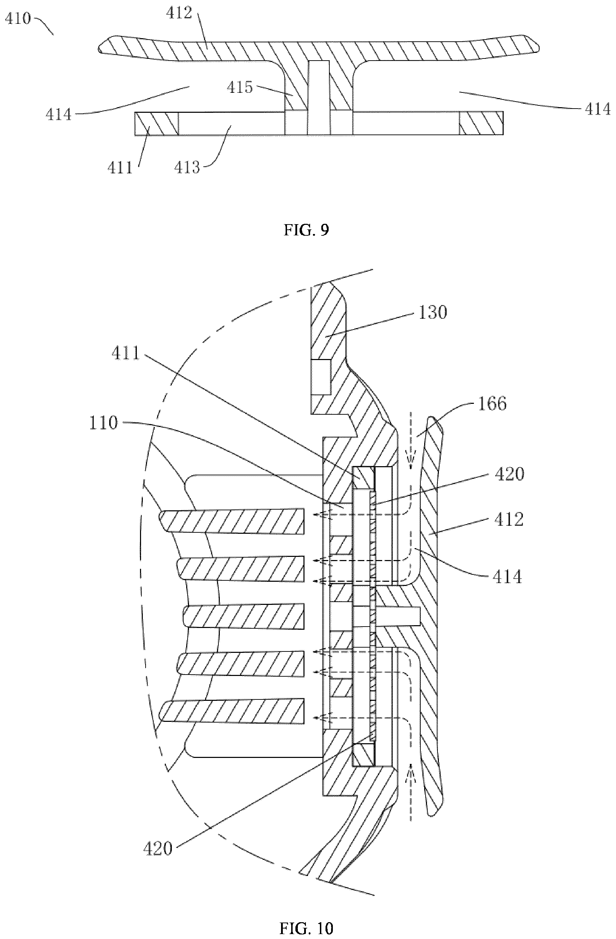

To mount the screen filter 420 on the housing 100, the screen filter 420 is first mounted on the support frame 410, and then the support frame 410 is inserted in the mounting groove 161 from rear to front; during a process of inserting the support frame 410, the limiting rib 418 is inserted in the limiting slot 163, and when the support frame 410 is inserted till the tail plate 416 abuts against the limiting surface 162, the insertion is in place; now, the front end of the inner frame body 411 is inserted in the slit 164, the limiting column 165 is snapped into the limiting snap-in recess 419, and the screen filter 420 fully covers the air inlet 110. Referring to Fig. 10, when the screen filter 420 is mounted on the housing 100 via the support frame 410, the outer frame sheet 412 is disposed at an outer side of the housing 100; the upper side, the lower side, and the front side of the outer frame sheet 412 are all separated from the housing 100, i.e., none of the upper side, lower side, and front side of the outer frame sheet 412 contacts the housing 100 so that an interspace 166 with a predetermined width is formed therebetween, allowing for the air intake gap 414 to communicate with the external air. When the electric motor 320 drives the fan wheel 310 to rotate, the external air first flows into the air intake gap 414 via the interspace 166 and the through hole 417 and then accesses the inside of the housing 100 through the filter apertures 421 and the air inlet 110; this lateral air intaking manner may prevent the screen filter 420 from being blocked by large chunks of paper scraps or film leading to unsmooth air intaking, which may also increase the difficulty of the foreign objects such as the debris or paper scraps entering the air intake gap 414 with the air.

To enhance work efficiency of the hot air gun, in this implementation, the electric motor 320 exemplarily adopts a high-speed electric motor with a revolution speed *n* ranging from 30,000 rpm (revolutions per minute) to 60,000 rpm. As an exemplary solution of this implementation, the revolution speed *n* of the electric motor 320 is about 50,000 rpm. As an alternative solution of this implementation, the revolution speed *n* of the electric motor 320 may also be 30,000 rpm, 35,000 rpm, 40,000 rpm, 45,000 rpm, 48,000 rpm, 52,000 rpm, 55,000 rpm, 58,000 rpm, 60,000 rpm, or other reasonable value.

The high revolution speed of the electric motor 320 contributes a high air intake volume when the electric motor 320 drives the fan wheel 310 to rotate. Therefore, it is needed to set the filter apertures 421 with a reasonable aperture size D to ensure the air intaking effect while preventing large particles from accessing the inside of the gun body with the air, the aperture size D of the filter aperture 421 ranging from 0.5 mm to 2 mm. As an exemplary solution of this implementation, the filter aperture 421 is a circular hole, with the aperture size D being about 1 mm. In this implementation, the air inlet 110 is of a substantially rectangular shape with a height being about 2.5 mm and a width being in a range from 5 mm to 13 mm, an area of an individual filter aperture 421 being far smaller than that of an individual air inlet 110. As an alternative solution of this implementation, the filter aperture 421 may be set as a small square hole, a small rectangular hole, or another reasonable shape, and the aperture size D of the filter aperture 421 may also be set to 0.5 mm, 0.8 mm, 1.2 mm, 1.5 mm, 1.7 mm, 2 mm, or another reasonable value.

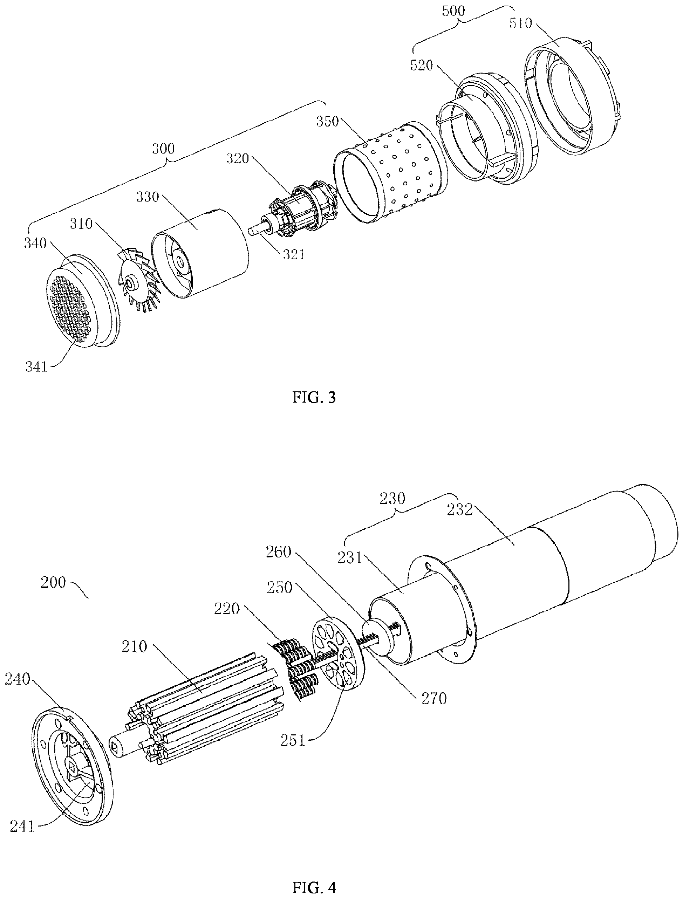

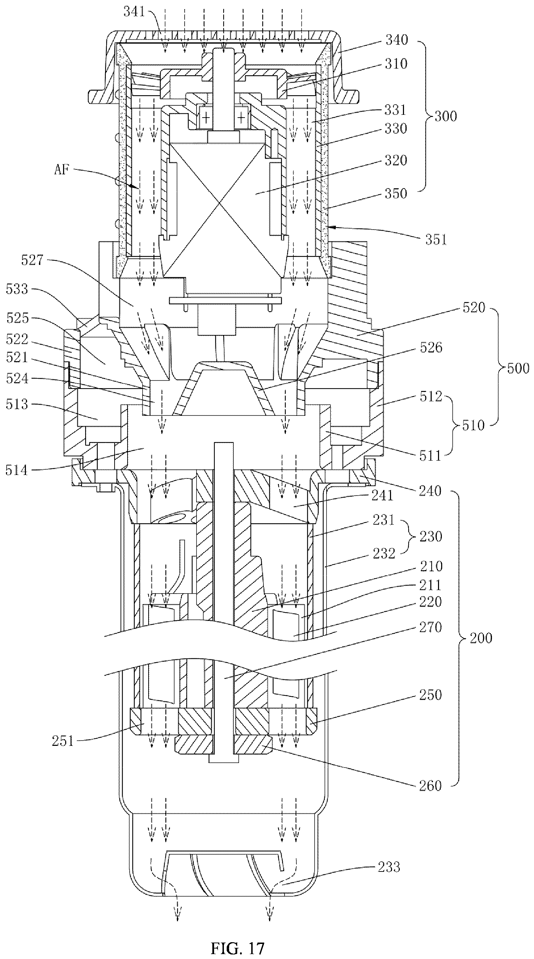

Referring to Figs. 3 and 17, in this implementation, the airflow generation assembly 300 comprises an electric motor 320, a fan wheel 310, an air guidance cylinder 330, and an end cap 340. The air guidance cylinder 330 is sleeved outside the electric motor 320; the air guidance cylinder 330 has a plurality of air guidance passages 331 distributed at intervals along the peripheral direction; the air guidance passages 331 extend in a front-rear direction; the air guidance passages 331 are disposed at an outer periphery of the electric motor 320 and correspond to blades on the fan wheel 310 in the front-rear direction. The electric motor 320 has a rotary shaft 321, the fan wheel 310 sleeving a rear end of the rotary shaft 321 and being disposed in a rear end of the air guidance cylinder 330. The end cap 340 sleeves the rear end of the air guidance cylinder 330 and covers the fan wheel 310, and a plurality of ventilation holes 341 distributed at intervals are arranged on the end cap 340. When the electric motor 320 drives the fan wheel 310 to rotate, the air accessing the inside of the housing 100 flows forward into the airflow generation assembly 300 through the ventilation holes 341, and the air flowing into the airflow generation assembly 300 flows forward through the air guidance passages 331 to form a blown airflow flowing toward the heating assembly 200. The end cap 340 plays a role of baffling, which may prevent components such as electrical wires in the housing 100 from being suctioned into the airflow generation assembly 300 under a negative pressure action causing failure of the airflow generation assembly 300. To ensure smoothness of air intaking, the air inlets 110 on the housing 100 are exemplarily arranged rear to the end cap 340, and correspondingly, the screen filter 420 is partially or completely disposed rear to the end cap 340.

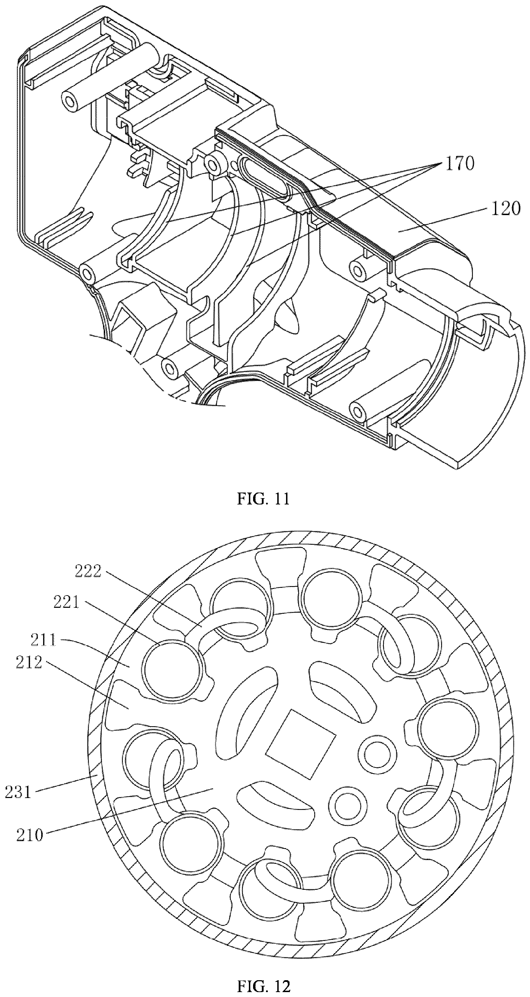

Referring to Figs. 3 and 11, the airflow generation assembly 300 is securely enclasped by the housing 100. To alleviate pulsation of the gun body during operating, an elastic shock absorber 350 is arranged between the airflow generation assembly 300 and the housing 100. As an exemplary solution of this implementation, the shock absorber 350 is a shock absorption sleeve 351, the shock absorption sleeve 351 being sleeved outside the air guidance cylinder 330, a plurality of convex ribs 170 distributed at intervals in the front-rear direction being provided on respective inner walls of the left housing body 120 and the right housing body 130; when the left housing body 120 and the right housing body 130 are fixed together, the convex ribs 170 at the left and right sides tightly enclasp the airflow generation assembly 300, so that the airflow generation assembly 300 is secured in the housing 100. The shock absorber 350 may not only reduce pulsation transferred from the airflow generation assembly 300 to the housing 100, but also may enhance secureness of the housing 100 enclasping the airflow generation assembly 300 via the convex ribs 170, thereby preventing the airflow generation assembly 300 from radial play relative to the housing 100 during operation.

Referring to Figs. 4, 12, and 17, the heating assembly 200 comprises a heating element rack 210, a heating element 220, a cartridge 230, and a rear base cover 240; a plurality of accommodation grooves 211 distributed at intervals along the peripheral direction are arranged on the outer peripheral wall of the heating element rack 210, the accommodation grooves 211 extending in the front-rear direction, adjacent two accommodation grooves 211 being spaced by a baffle bar 212. The heating element 220 has a plurality of segments of helical heating bodies 221, adjacent two segments of heating bodies 221 being connected via a connecting segment 222, each segment of heating body 221 being disposed in the corresponding accommodation groove 211, a portion of the connecting segment 222 abutting against a front end of the baffle bar 212, another portion of the connecting segment 222 abutting against a rear end of the baffle bar 212. The cartridge 230 is sleeved outside the heating element rack 210; to reduce heat transferred from the heating element assembly 200 to the housing 100, as an exemplary solution of this implementation, the cartridge 230 comprises a thermally insulative sleeve 231 sleeved outside the heating element rack 210 and a metallic sleeve 232 sleeved outside the thermally insulative sleeve 231; the thermally insulative sleeve 231 may be made of a material with a low thermally conductive coefficient such as mica or ceramics, and the thermally insulative sleeve 231 may adopt an inner-outer dual-layer sleeve structure. The rear base cover 240 is secured to a rear end of the metallic sleeve 232, a rear end of the thermally conductive sleeve 231 abuts against the rear base cover 240, and an air passage port 241 allowing for the blown airflow to flow forward is provided on the rear base cover 240. To prevent the heating element 220 from front-rear play relative to the heating element rack 210, a limiting cover 250 and a retaining plate 260 configured to retain the limiting cover 250 are provided at a front end of the heating element rack 210, the limiting cover 250 being provided with an avoidance hole 251 corresponding to the accommodation groove 211 so that the hot airflow can flow forward from the accommodation groove 211, the retaining plate 260 being connected to the rear base cover 240 via a limiting sheet 270 so that the retaining plate 260 is limited in the front-rear direction, the retaining plate 260 being disposed such that the limiting cover 250 abuts against the front end of the heating element rack 210, the limiting cover 250 and the retaining plate 260 being disposed in a front end of the metallic sleeve 232, an air outlet 233 being provided at the front end of the metallic sleeve 232. Other structures of the heating assembly 200 refer to conventional technologies, e.g., the heating assembly 200 further comprises a temperature sensor configured to sense hot air temperature, a NTC protection circuit configured to adjust the energization current of the heating element 220, and a fuse configured to break the heating element 220, etc. As an alternative solution of this implementation, the heating element rack 210 of the heating assembly 200 may also adopt a cross shape or an asterisk shape; in this case, a filamentous heating element 220 is directly wound on the heating element rack 210.

Referring to Figs. 3 and 17, the hot air gun further comprises an airflow guidance enclosure 500 arranged between the airflow generation assembly 300 and the heating assembly 200, the airflow guidance enclosure 500 comprising a blown airflow guidance construction 540 and a heat-dissipating airflow guidance construction 530, the blown airflow guidance construction 540 being configured to guide a blown airflow (AF) to flow from rear to front, the heat-dissipating airflow guidance construction 530 being disposed at an outer periphery of the blown airflow guidance construction and configured to guide residual heated air (HA) in the heating assembly 200 to flow from front to rear. As an exemplary solution of this implementation, the airflow guidance enclosure 500 comprises a front enclosure portion 510 and a rear enclosure portion 520 which are fixed in the front-rear direction, a rear end of the rear enclosure portion 520 being sleeved outside a front end of the airflow generation assembly 300, a rear end of the front enclosure portion 510 and a front end of the rear enclosure portion 520 being socketed with each other, a front end of the front enclosure portion 510 abutting against the rear base cover 240, the rear end of the metallic sleeve 232, the rear base cover 240, the front enclosure portion 510, and the rear enclosure portion 520 being securely locked via a bolt.

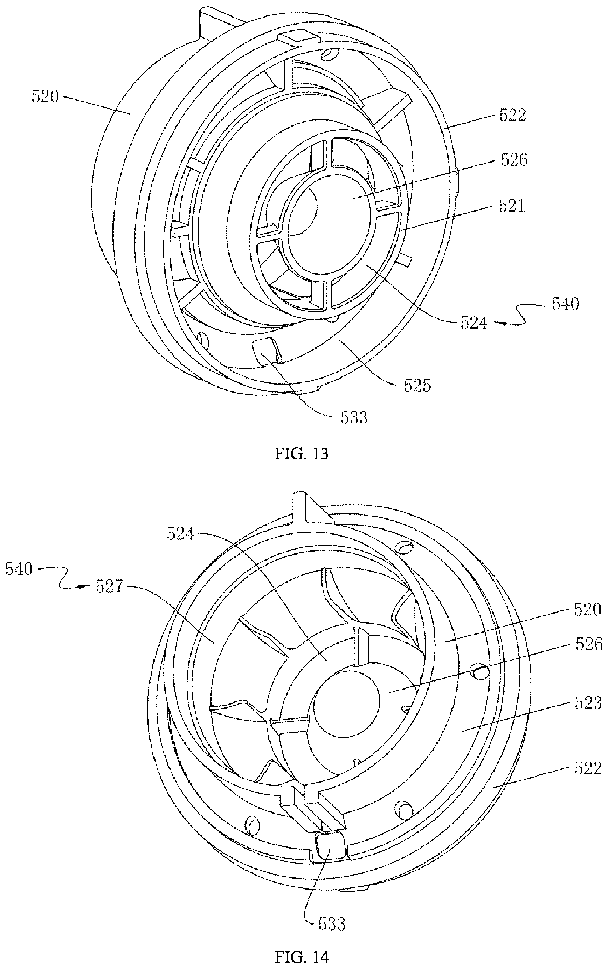

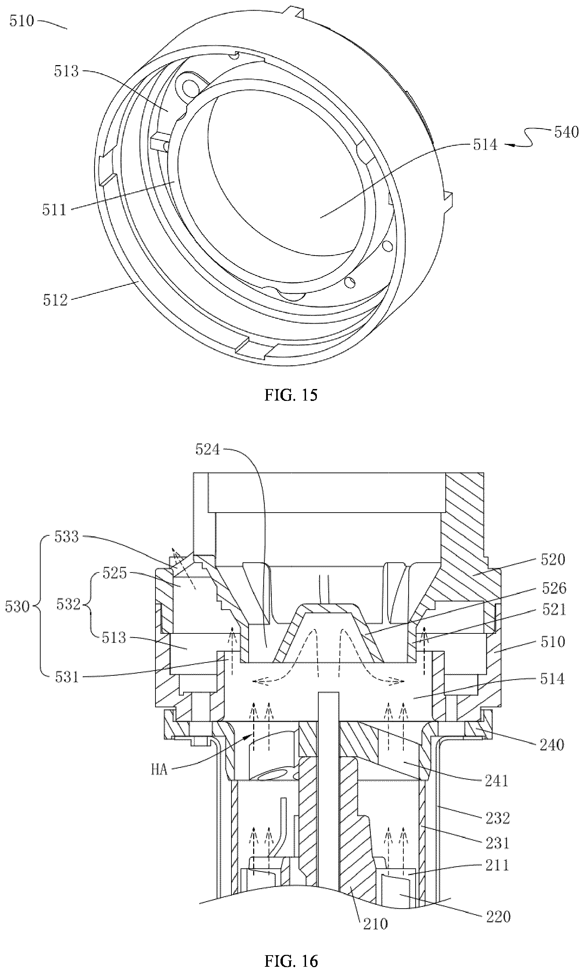

Referring to Fig. 15, the front enclosure portion 510 comprises an inner ring body 511 and an outer ring body 512, a front cavity 513 with its rear side open being defined by encirclement of the inner ring body 511 and the outer ring body 512, an air guidance cavity 514 through in the front-rear direction being defined by encirclement of the inner ring 511, a front end of the air guidance cavity 514 communicating with the air passage port 241 on the rear base cover 240. Referring to Figs. 13 and 14, the rear end of the rear enclosure portion 520 is sleeved outside the air guidance cylinder 330, a front end of the rear enclosure portion 520 is provided with a rim 521 extending forward and an apron plate 522 disposed at the outer periphery of the rim 521, a rear partition plate 523 is arranged between a rear end of the apron plate 522 and the rim 521, an air guidance port 524 communicating with the inner cavity of the rear enclosure portion 520 is defined by encirclement of the rim 521, and a rear cavity 525 with its front end open is defined by encirclement of the rim 521, the apron plate 522, and the rear partition plate 523. Referring to Fig. 17, the rear end of the outer ring body 512 and the front end of the apron plate 522 are socket-fitted and circumferentially limited relative to each other, the front cavity 513 communicates with the rear cavity 525, the rim 521 is inserted in the air guidance cavity 514 so that the air guidance port 524 communicates with the air guidance cavity 514, and an outer diameter of the rim 521 is smaller than an internal diameter of the air guidance cavity 514.

Referring to Fig. 17, the blown airflow guidance construction 540 of the airflow guidance enclosure 500 comprises an inner cavity 527 of the rear enclosure portion 520, an air guidance port 524, and an air guidance cavity 514; the air guidance passage 331 communicates with the accommodation groove 211 via the inner cavity 527 of the rear enclosure portion 520, the air guidance port 524, the air guidance cavity 514, and the air passage port 241; the blown airflow AF created when the electric motor 320 drives the fan wheel 310 to rotate flows towards the accommodation groove 211 from rear to front through the air guidance passage 331, the inner cavity 527 of the rear enclosure portion 520, the air guidance port 524, the air guidance cavity 514, and the air passage port 241; the heating body 221 in the accommodation groove 211 is energized to generate heat when operating, the blown airflow flowing through the heating body 221 is heated to form a hot airflow, and the hot airflow flows forward through the air outlet 233 at the front end of the cartridge 230 and is blown forward therefrom.

Referring to Fig. 16, the heat-dissipating airflow guidance construction 530 is disposed at an outer ring of the airflow guidance enclosure 500; the heat-dissipating airflow guidance construction 530 comprises a heat-dissipating gap 531 formed between an outer surface of the rim 521 and an inner surface of the inner ring body 511, a heat-dissipating cavity 532 defined by fitting between the front cavity 513 and the rear cavity 525, and a heat-dissipating hole 533 disposed on the rear partition plate 523; the rear partition plate 523 forms a rear cavity wall of the heat-dissipating cavity 532; and the heat-dissipating cavity 532 communicates with the inner cavity of the housing 100 via the heat-dissipating hole 533 on the rear partition plate 523. When the hot air gun 10 is hung such that its tip end points downward upon end of use, residual high-temperature heated air HA in the heating assembly 200 flows upward; since the heat-dissipating airflow guidance construction 530 is disposed at the outer periphery of the blown airflow guidance construction 540, the high-temperature heated air HA flowing upward is guided by the heat-dissipating airflow guidance construction 530 mainly to the outer periphery of the blown airflow guidance construction 540, which prevents the high-temperature heated air from flowing directly through the blown airflow guidance construction 540 into the electric motor 320 from front to rear causing rise of the internal temperature of the electric motor 320, thereby preventing accelerated aging of the components of the electric motor 320 caused by the high temperature inside the electric motor 320, particularly preventing the circuit board of the electric motor 320 from accelerated aging caused by the high temperature, which ensures work performance and service life of the electric motor 320 and enhances work performance and stability of the hot air gun.

Referring to Figs. 13 and 16, to prevent the upward flowing high-temperature heated air from accessing the inside of the electric motor 320 as much as possible, a conical hood 526 disposed at the inner periphery of the rim 521 is provided at the front end of the rear enclosure portion 520, the air guidance port 524 being formed between an outer surface of the conical hood 526 and the inner surface of the rim 521, an outer diameter of the conical hood 526 increasing gradually from rear to front. The conical hood 526 may effectively block the upward flowing high-temperature heated air so as to reduce the high-temperature heated air flowing upward into the electric motor 320, which prevents a large temperature rise occurring to the electric motor 320. Since the outer diameter of the conical hood 526 increases gradually from rear to front while the caliber of the air guidance port 524 gradually shrinks from rear to front, the blown airflow flows through the air guidance port 524 smoothly from rear to front at a higher forward flowing speed. As a feasible solution of this implementation, the conical hood 526 may be set to a reasonable shape such as a hollow cone shape, a hollow polygonal pyramid shape, or the like.

Referring to Fig. 16, when the hot air gun 10 is hung such that its tip end points downward upon end of use, the residual high-temperature heated air HA in the heating assembly 200 flows upward along the accommodation groove 211 and accesses the inside of the air guidance cavity 514 after flowing through the air passage port 241 on the rear base cover 240; a fraction of the high-temperature heated air accessing the inside of the air guidance cavity 514 flows into the heat-dissipating cavity 532 through the heat-dissipating gap 531, another fraction of the high-temperature heated air is baffled by the conical hood 526 to flow towards the heat-dissipating gap 531 into the heat-dissipating cavity 532 through the heat-dissipating gap 531, and a small fraction of high-temperature heated air flows upward towards the electric motor 320 through the air guidance port 524. The high-temperature heated air flowing into the heat-dissipating cavity 532 may flow into the inner cavity of the housing 100 through the heat-dissipating hole 533. Since the inner cavity of the housing 100 has a large space with limited high-temperature heated air, the high-temperature heated air can be effectively cooled in the housing 100; in addition, since the air inlet 110 is provided at the rear end of the housing 100, the fraction of the high-temperature heated air flowing into the housing 100 may also flow out of the housing 100 via the air inlet 110.

Referring to Fig. 2, the hot air gun 10 further comprises a main control board 610 and an operation display unit 620. The main control board 610 is vertically disposed in the rear end of the housing 100, and a top cover 180 is provided on a top side of the rear end of the housing 100. The operation display unit 620 is disposed on the top side of the rear end of the housing 100 and has a display and a key exposed from the top cover 180. The user may adjust air outlet temperature and intensity via the key. The display may show operating parameters such as hot air temperature and hot air intensity. A switch for starting/stopping the gun body is provided on the grip 150. Electronic components such as the electric motor 320, the heating element 220, and the switch are electrically connected to and/or communicate with the main control board 610. A power supply construction supplies power to the power-consuming components such as the electric motor 320 and the heating element 220. In this implementation, the power supply construction of the hot air gun may be powered by mains electricity connected via electrical wires, or powered by a battery pack, which is not limited here.

When the hot air gun 10 is operated, the electric motor 320 drives the fan wheel 310 to rotate at a high speed; external air flows into the housing 100 through the filter apertures 421 and the air inlet 110 under the action of negative pressure to create a blown airflow AF; the blown airflow AF flows forward towards the accommodation groove 211 sequentially through the ventilation hole 341, the air guidance passage 331, the inner cavity 527 of the rear enclosure portion 520, the air guidance port 524, the air guidance cavity 514, and the air passage port 241; the heating body 221 in the accommodation groove 211 is energized to produce heat when the hot air gun 10 is operated; the blown airflow flowing through the accommodation groove 211 is heated to form a hot airflow, the hot airflow flowing forward through the air outlet 233 at the front end of the cartridge 230 and being blown forward therefrom.

When the hot air gun 10 is hung upon end of use, the residual high-temperature heated air HA in the accommodation groove 211 mainly flows upward through the accommodation groove 211, the air passage port 241, and the heat-dissipating airflow guidance construction 530 to access the inner cavity of the housing 100; the high-temperature heated air can be effectively cooled in the housing 100; and a fraction of high-temperature heated air accessing the inside of the housing 100 may also flow out of the housing 100 via the air inlet 110.

As an alternative solution of this implementation, the air inlet 110 may also be arranged on a rear wall of the housing 100; in this case, the accommodation groove 161 is disposed on the rear wall of the housing 100 and may extend in the left-right direction or in the up-down direction; and correspondingly, the screen filter 420 is detachably mounted at the rear side of the housing 100 via the support frame 410. To prevent the main control board 610 from blocking air intake, the main control board 610 may be disposed at another position in the housing 100.

Besides the specific implementations described *supra,* the disclosure further has other implementations; those skilled in the art may make various changes and modifications according to the disclosure, and all of such changes and modifications fall within the scope defined in the appended claims without departing from the spirits of the disclosure.

## Claims

1. A hot air gun (10), comprising a housing (100), a heating assembly (200), and an airflow generation assembly (300), the heating assembly (200) and the airflow generation assembly (300) being arranged in the housing (100), the airflow generation assembly (300) being disposed rear to the heating assembly (200), the airflow generation assembly (300) comprising a fan wheel (310) and an electric motor (320) configured to drive the fan wheel (310), an air inlet (110) being provided at a rear portion of the housing (100), **characterized in that** the hot air gun (10) further comprises a screen filter (420) mounted on the housing (100) via a support frame (410), the screen filter (420) covering the air inlet (110) and being provided with a plurality of filter apertures (421) distributed at intervals, an aperture size of the filter aperture (421) being smaller than that of the air inlet (110).

2. The hot air gun (10) according to claim 1, **characterized in that** the aperture size of the filter aperture (421) is in a range from 0.5 mm to 2 mm; and/or, a revolution speed of the electric motor (320) is in a range from 30,000 revolutions per minute to 60,000 revolutions per minute.

3. The hot air gun (10) according to claim 1 or claim 2, **characterized in that** the support frame (410) comprises an inner frame body (411) and an outer frame sheet (412) which are spaced from each other, the screen filter (420) is disposed on the inner frame body (411), the inner frame body (411) is fitted with the housing (100), the outer frame sheet (412) covers the inner frame body (411), and an air intake gap (414) communicating with the filter aperture (421) is formed between the outer frame sheet (412) and the inner frame body (411).,
wherein preferably the outer frame sheet (412) is disposed at an outer side of the housing (100), and the outer frame sheet (412) is at least partially separated from the housing (100) in a circumferential direction.

4. The hot air gun (10) according to claim 3, **characterized in that** the support frame (410) comprises a connecting portion (415) configured to connect the inner frame body (411) and the outer frame sheet (412), and a limiting construction (101) configured to limit the screen filter (420) is arranged between the screen filter (420) and the inner frame body (411) and/or between the screen filter (420) and the connecting portion (415).

5. The hot air gun (10) according to any one of the preceding claims, **characterized in that** the screen filter (420) is detachably mounted on the housing (100) via the support frame (410),
wherein preferably the housing (100) comprises a mounting groove (161) in which the inner frame body (411) is inserted, and a limit-fitting construction (102) is arranged between the support frame (410) and the housing (100).

6. The hot air gun (10) according to claim 5, **characterized in that** the limit-fitting construction (102) comprises a limiting surface (162) disposed at a tail end of the mounting groove (161) and a tail plate (416) disposed at a tail end of the support frame (410), the support frame (410) which is fitted with the mounting groove (161) and mounted on the housing (100) allows for the tail plate (416) to abut against the limiting surface (162), and a through hole (417) communicating with the air intake gap (414) is provided on the tail plate (416).

7. The hot air gun (10) according to claim 5 or claim 6, **characterized in that** the limit-fitting construction (102) comprises a limiting slot (163) formed on two opposite side groove walls of the mounting groove (161), respectively, and a limiting rib (418) arranged on two opposite sides of the inner frame body (411), respectively, and the support frame (410) which is fitted with the mounting groove (161) and mounted on the housing (100) allows for the limiting rib (418) to be inserted in the limiting slot (163)
wherein preferably the limit-fitting construction (102) comprises a limiting column (165) arranged at a head end of the mounting groove (161) and a limiting snap-in recess (419) arranged at a head end of the inner frame body (411), and the support frame (410) which is fitted with the mounting groove (161) and mounted on the housing (100) allows for the limiting column (165) to be inserted in the limiting snap-in recess (419).

8. The hot air gun (10) according to any one of the preceding claims, **characterized in that** the hot air gun (10) further comprises an airflow guidance enclosure (500) arranged between the airflow generation assembly (300) and the heating assembly (200), the airflow guidance enclosure (500) comprising a blown airflow guidance construction (540) and a heat-dissipating airflow guidance construction (530), the blown airflow guidance construction (540) being configured to guide a blown airflow (AF) generated by the airflow generation assembly (300) to flow from rear to front, the heat-dissipating airflow guidance construction (530) being disposed at an outer periphery of the blown airflow guidance construction (540) and configured to guide residual heated air (HA) in the heating assembly (200) to flow from front to rear.

9. The hot air gun (10) according to claim 8, **characterized in that** the airflow guidance enclosure (500) comprises a front enclosure portion (510) and a rear enclosure portion (520) which are fixed in a front-rear direction, the blown airflow guidance construction (540) comprises a rim (521) arranged at a front end of the rear enclosure portion (520) and an air guidance cavity (514) arranged on the front enclosure portion (510); an air guidance port (524) is defined by encirclement of the rim (521); the rim (521) is inserted in the air guidance cavity (514) so that the air guidance port (524) communicates with the air guidance cavity (514); and the heat-dissipating airflow guidance construction (530) comprises a heat-dissipating gap (531) arranged between an outer surface of the rim (521) and a cavity wall of the air guidance cavity (514).

10. The hot air gun (10) according to claim 9, **characterized in that** the heat-dissipating airflow guidance construction (530) comprises a heat-dissipating cavity (532) which is arranged between the rear enclosure portion (520) and the front enclosure portion (510) and disposed at an outer periphery of the blown airflow guidance construction (540), the heat-dissipating gap (531) communicating with the heat-dissipating cavity (532),
wherein preferably the rear enclosure portion (520) is provided with a rear partition plate (523) forming a rear cavity wall of the heat-dissipating cavity (532), and the heat-dissipating airflow guidance construction (530) comprises a heat-dissipating hole (533) arranged on the rear partition plate (523) and communicating with the heat-dissipating cavity (532)
wherein optionally a conical hood (526) located at an inner periphery of the rim (521) is provided at a front end of the rear enclosure portion (520), and the air guidance port (524) is arranged between an outer surface of the conical hood (526) and an inner surface of the rim (521), an outer diameter of the conical hood (526) gradually increasing from rear to front.

11. The hot air gun (10) according to any one of the preceding claims, **characterized in that** the heating assembly (200) comprises a heating element rack (210), a heating element (220), and a cartridge (230), a plurality of accommodation grooves (211) distributed at intervals in a peripheral direction being arranged on an outer wall of the heating element rack (210), the accommodation groove (211) extending in a front-rear direction, the heating element (220) being arranged in the accommodation groove (211), the cartridge (230) being sleeved outside the heating element rack (210).

12. The hot air gun (10) according to claim 11, **characterized in that** the airflow generation assembly (300) comprises an air guidance cylinder (330) sleeved outside the electric motor (320), the fan wheel (310) is disposed in the air guidance cylinder (330), the air guidance cylinder (330) has an air guidance passage (331) extending in a front-rear direction, and a rear end of the airflow guidance enclosure (500) is sleeved outside the air guidance cylinder (330).

13. The hot air gun (10) according to claim 12, **characterized in that** the airflow generation assembly (300) comprises an end cap (340) disposed at a rear end of the air guidance cylinder (330), and a plurality of ventilation holes (341) distributed at intervals are arranged on the end cap (340).

14. The hot air gun (10) according to claim 13, **characterized in that** the screen filter (420) is at least partially disposed rear to the end cap (340).

15. The hot air gun (10) according to any one of the preceding claims, **characterized in that** the airflow generation assembly (300) is fixedly enclasped by the housing (100), and an elastic shock absorber (350) is arranged between the airflow generation assembly (300) and the housing (100).
